Europäisches Patentamt

European Patent Office

Office européen des brevets

(11) Publication number: **0 157 608**
**B1**

(12) **EUROPEAN PATENT SPECIFICATION**

(45) Date of publication of patent specification: **14.06.89**

(51) Int. Cl.⁴: **B 29 C 45/00, B 29 C 45/17**

(21) Application number: **85302201.0**

(22) Date of filing: **29.03.85**

(54) Plastic magnet injection moulding machine.

(30) Priority: **30.03.84 JP 45046/84 u**

(43) Date of publication of application:
**09.10.85 Bulletin 85/41**

(45) Publication of the grant of the patent:
**14.06.89 Bulletin 89/24**

(84) Designated Contracting States:
**AT DE FR GB IT**

(56) References cited:
**US-A-3 019 505**
**US-A-3 530 551**
**US-A-3 842 148**

**PATENTS ABSTRACTS OF JAPAN, vol. 5, no. 7
(E-41)679r, 17th January 1981; & JP-A-55 138
218 (MATSUSHITA DENKI SANGYO K.K.) 28-
10-1980**

(73) Proprietor: **THE JAPAN STEEL WORKS, LTD.**
**12-1, Yurakucho-1-chome, Chiyoda-ku
Tokyo (JP)**

(72) Inventor: **Yokota, Akira
No. 10-4-404, Minami 2-chome Funakoshi
Aki-ku Hiroshima-shi Hiroshima (JP)**
Inventor: **Kato, Masashi
No. 13-25-104, Minami 2-chome Funakoshi
Aki-ku Hiroshima-shi Hiroshima (JP)**

(74) Representative: **Brunner, Michael John et al
GILL JENNINGS & EVERY 53-64 Chancery Lane
London WC2A 1HN (GB)**

## Description

The present invention relates to an injection moulding machine for plastic magnets, as described in the preamble of the independent claims.

In the injection moulding of anisotropic plastic magnets, a magnetic field has to be applied during the moulding process. The conventional plastic magnet injection moulding machines can be classified into two types according to the methods of applying the magnetic field. In one type exciting coils for producing the magnetic field are incorporated within the metal mould halves in and in the other type an exciting coil is arranged on the outer periphery of each of a stationary and a movable platen of a mould clamping device.

There are disadvantages in the type which incorporates the exciting coil within the mould halves, because, in order to incorporate the exciting coil into the mould halves, a space is necessary, the mould thus becoming correspondingly large and it becoming necessary to use a large size of injection moulding machine. In a mould for simultaneously moulding a number of products, the yield is reduced and the productivity is lowered.

On the other hand, in the type in which stationary and movable platens are surrounded with exciting coils, there are disadvantages in that since the exciting coils are arranged on the outer periphery of the stationary and movable platens, the device becomes complicated and large in size. Furthermore, it can be necessary to remove the exciting coil every cycle when the moulded products are taken out, so that it has been difficult to improve the efficiency of production.

JP-A-55138218 of the type, indicated in the preamble of claim 1, discloses a magnetic field oriented metal mould having first and second members of magnetic material defining a cavity and fixed to respective first and second platens, the first member being a core member and the second member being an outer member, and first and second side exciting coils arranged on the respective outer peripheries of the first and second magnetic members, non-magnetic bodies being provided to further define the cavity into which is poured the casting material, a radial magnetic field being produced within the cavity.

An object of the present invention is to provide a plastic magnet injection moulding machine in which plastic magnets may be effectively moulded without exciting coils having to be provided within the mould halves, but without an increase in size of the mould and without complicating the structure.

According to the present invention a plastic magnet injection moulding machine comprises first and second platen blocks each made of a ferromagnetic material and fixed to or integrated with respective first and second platens; a first side and a second side exciting coil arranged on the respective outer periphery of the first side and second side ferromagnetic blocks; and a first side and a second side cover each made of a non-magnetic material; characterised in that:

the first side and second side covers are respectively attached to the first and second platens so as to surround the respective outer peripheries of the first side exciting coil and ferromagnetic block and of the second side exciting coil and ferromagnetic block; the first side ferromagnetic block and non-magnetic cover have surfaces opposed to the second side which are flush with each other and lie in a common plane substantially parallel with the first platen; and the second side ferromagnetic block and non-magnetic cover have surfaces opposed to the first side which are flush with each other and lie in a common plane parallel with the second platen, and bolt holes being provided for fitting first and second mould halves to the respective common planes.

Further embodiments of the invention are defined in the features of the dependent claims.

One embodiment of a machine according to the present invention will now be described with reference to the accompanying drawings in which:—

Figure 1 is a diagram showing a plastic magnet injection moulding machine according to the present invention;

Figure 1A is a perspective view of the machine;

Figure 2 is a diagrammatic view from the line II-II in Figure 1;

Figure 3 is a diagram generally showing a flow of magnetic flux; and

Figure 3A is a side elevational view of the machine using a mould clamping mechanism, showing the magnetic flux flow.

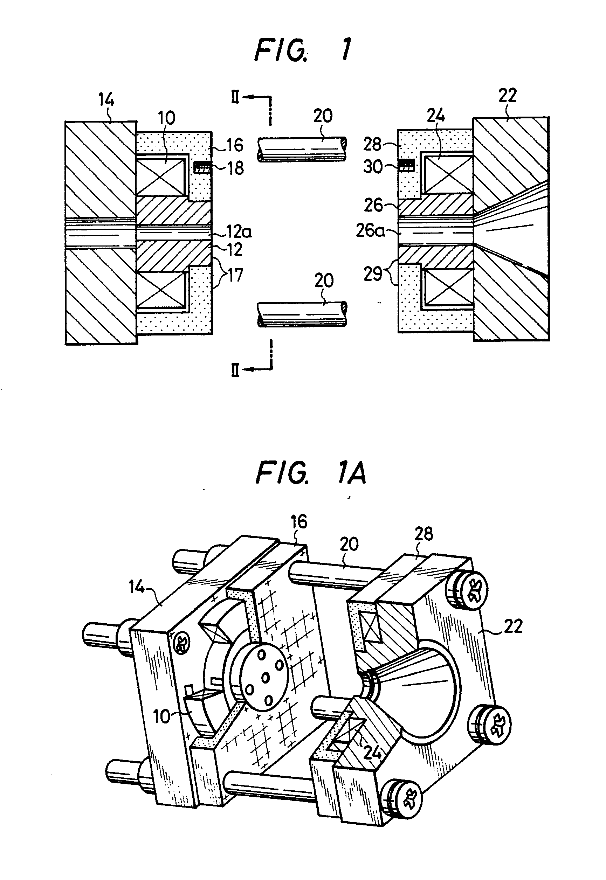

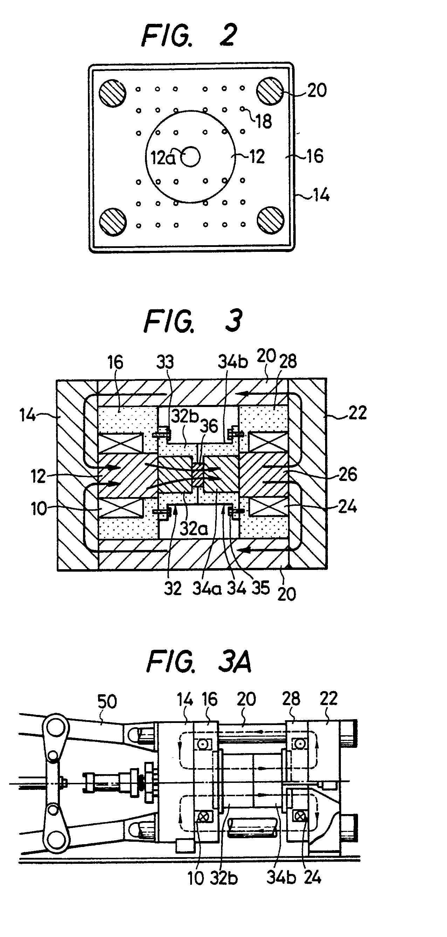

A movable platen block 12 made of a ferromagnetic material (for example, ferromagnetic steel) is provided with a movable side exciting coil 10 at the outer periphery thereof, and is stationary at the centre of a movable platen 14. A movable side cover 16 made of a non-magnetic material (for example, non-magnetic steel) is mounted on the movable platen 14 so as to surround the respective outer periphery of the movable side exciting coil 10 and the movable side ferromagnetic block 12. The respective surfaces of the movable side ferromagnetic block 12 and the movable side non-magnetic cover 16 opposite to the corresponding surfaces attached to the movable platen 14 are flush with each other and lie in a common plane 17 as best shown in Figures 1 and 1A. Thus, the movable side ferromagnetic block 12 and the movable side non-magnetic cover 16 are of equal thickness. As shown in Figure 2, a plurality of threaded bolt holes 18 for a removable mould half is formed extending from the common plane 17. Thus, it is possible to fit a mould half without interference with tie bars 20.

With respect to a stationary platen 22, there are provided a stationary side exciting coil 24, a stationary side block 26 of ferromagnetic material and a stationary side cover 28 of non-magnetic material, which are arranged in the same manner as on the side of the movable platen 14 and the respective surfaces of the stationary side ferromagnetic block 26 and the stationary side non-magnetic cover 28 opposite to the corresponding surfaces attached to the stationary platen 22 are flush with each other and lie in a common plane 29 in which stationary mould half threaded bolt holes 30 are formed. This arrangement is basically the same as that of the movable side, but is different in that the diameter of a nozzle admission hole 26a in the stationary side ferromagnetic block 26 is a larger than that of an ejector rod hole 12a in the movable side ferromagnetic block 12.

Figures 3 and 3A show briefly the state of the apparatus after mould closing when a magnetic field is generated. A movable mould half 32 is stationary to the movable side non-magnetic cover 16 with bolts 33, and a stationary mould half 34 is stationary to the stationary side non-magnetic cover 28 with bolts 35. The mould halves are clamped to each other by a mould-clamping mechanism 50 as shown in Figure 3A. The movable mould half 32 is constituted by a portion 32a made of a ferromagnetic material and a portion 32b made of a non-magnetic material, and the stationary mould half 34 is also constituted by a portion 34a made of a ferromagnetic material and a portion 34b made of a non-magnetic material.

When a current is caused to flow in the movable side exciting coil 10 and the stationary side exciting coil 24 with the mould halves clamped, a magnetic flux produced thereby passes through the ferromagnetic portion, a closed magnetic path being formed through the stationary platen 22, the tie bars 20, the movable platen 14, the movable side ferromagnetic block 12, the ferromagnetic portion 32a of the movable mould half 32, a cavity 36 between the movable mould half 32 and the stationary mould half 34, the ferromagnetic portion 34a of the stationary mould half 34, the stationary side ferromagnetic block 26, and the stationary platen 22.

In this way, the magnetic field in the moulding formed in the cavity 36 is orientated by the imposed magnetic field. Since the magnetic flux forms a completely closed magnetic path, it is possible to cause the magnetic field to act effectively in the cavity 36. The movable platen 14 and the stationary platen plate 22 are increased only in the dimension of their thickness. Thus, the space is effectively used without increasing the size of the mould-clamping mechanism. The fitting/detaching of the movable mould half 32 and the stationary mould half 34 can readily be performed as in an ordinary injection moulding machine. Furthermore, it is unnecessary to incorporate the exciting coils into the mould halves, so that the design of the mould is simplified and the cost of the mould can be reduced. Also, the mould may be used as an ordinary injection moulding machine when no current is caused to flow in the exciting coils 10, 24.

Although the movable side ferromagnetic block 12 is provided separately from and attached to the movable platen 14, the ferromagnetic blocks 12, 26 and the respective platens 14, 22 may be formed integrally with each other.

In the case where an ordinary moulding machine is modified for processing a plastic magnet, the separate ferromagnetic blocks 26 and 12 are mounted on the stationary and movable platens 22 and 14 respectively.

## Claims

1. A plastic magnet injection moulding machine comprising: first and second platen blocks (26, 12) each made of a ferromagnetic material and fixed to or integrated with respective first and second platens (22, 14); a first side and a second side exciting coil (24, 10) arranged on the respective outer periphery of the first side and second side ferromagnetic blocks (26, 12); and a first side and a second side cover (28, 16) each made of a non-magnetic material;

   characterised in that:

   the first side and second side covers (28, 16) are respectively attached to the first and second platens (22, 14) so as to surround the respective outer peripheries of the first side exciting coil and ferromagnetic block and of the second side exciting coil and ferromagnetic block;

   the first side ferromagnetic block (26) and non-magnetic cover (28) have surfaces opposed to the second side which are flush with each other and lie in a common plane (29) substantially parallel with the first platen (22); and the second side ferromagnetic block (12) and non-magnetic cover (16) have surfaces opposed to the first side which are flush with each other and lie in a common plane parallel with the second platen (14), and bolt holes (30, 18) being provided for fitting first and second mould halves (34, 32) to the respective common planes.

2. The machine according to claim 1, wherein the first and second side platen blocks (26, 12) are formed integrally with the first and second platens (22, 14), respectively.

3. The machine according to claim 1 or claim 2, wherein the first platen block (26) and first platen (22) are stationary, and the second platen block (12) and second platen (14) are movable.

## Patentansprüche

1. Maschine zum Spritzgießen eines Magnets aus Kunststoff, umfassend: erste und zweite Aufspannplatten-Blöcke (26, 12), die jeweils aus einem ferromagnetischen Material geformt und an jeweiligen ersten bzw. zweiten Aufspannplatten (22, 14) befestigt oder materialeinheitlich damit ausgebildet sind, je eine an einer ersten Seite und einer zweiten Seite angeordnete Erregerspule (24, 10), die am betreffenden Außenumfang des ersten bzw. zweiten ferromagnetischen Blocks (26, 12) angeordnet sind, sowie eine an einer ersten Seite und eine an einer zweiten Seite vorgesehene Abdeckung (28, 16), die jeweils aus einem nichtmagnetischen Material geformt sind, dadurch gekennzeichnet, daß die erstseitigen und zweitseitigen Abdeckungen (28, 16) an ersten bzw. zweiten Aufspannplatten (22, 14) so angebracht sind, daß sie den betreffenden Außenumfang von Erregerspule und ferromagnetischem Block an der ersten Seite bzw. von Erregerspule und ferromagnetischem Block an der zweiten Seite umschließen, der ferromagnetische Block (26) und die nichtmagnetische Abdeckung (28) an der ersten Seite jeweils der zweiten Seite gegenüberliegende Flächen aufweisen, die bündig miteinander abschließen und in einer gemeinsamen Ebene (29) praktisch parallel zur ersten Aufspannplatte (22) liegen, und der ferromagnetische Block (12) und die nichtmagnetische Abdeckung (16) an der zweiten Seite jeweils der ersten Seite gegenüberliegende Flächen aufweisen, die bündig miteinander abschließen und in einer gemeinsamen Ebene parallel zur zweiten Aufspannplatte (14) liegen, und Schraubbolzenbohrungen (30, 18) zum Aufspannen von ersten bzw. zweiten Formhälften (34, 32) an den betreffenden gemeinsamen Ebenen vorgesehen sind.

2. Maschine nach Anspruch 1, dadurch gekennzeichnet, daß die ersten und zweiten Aufspannplatten-Blöcke (26, 12) materialeinheitlich mit erster bzw. zweiter Aufspannplatte (22, 14) ausgebildet sind.

3. Maschine nach Anspruch 1 oder 2, dadurch gekennzeichnet, daß der erste Aufspannplatten-Block (26) und die erste Aufspannplatte (22) feststehend bzw. ortsfest und der zweite Aufspannplatten-Block (12) sowie die zweite Aufspannplatte (14) bewegbar sind.

**Revendications**

1. Machine à mouler par injection les aimants plastique comprenant: un premier et un deuxième blocs de plateaux (26, 12), dont chacun est fait d'une matière ferromagnétique et qui sont fixés ou intégrés respectivement à des premier et deuxième plateaux (22, 14), des bobines excitatrices de premier côté et de deuxième côté (24, 12) agencées respectivement sur la périphérie extérieure respective des blocs ferromagnétiques de premier côté et de deuxième côté (26, 12); et des chapeaux de premier côté et de deuxième côté (28, 16), dont chacun est fait d'une matière non magnétique, caractérisée en ce que:

les chapeaux de premier côté et de deuxième côté (28, 16) sont respectivement fixés au premier plateau et au deuxième plateau (22, 14), de manière à entourer les périphéries extérieures respectives de la bobine excitatrice et du bloc ferromagnétique du premier côté et de la bobine excitatrice et du bloc ferromagnétique du deuxième côté;

le bloc ferromagnétique (26) et le chapeau non magnétique (28) du premier côté présentent des surfaces regardant le deuxième côté qui sont à l'affleurement l'une de l'autre et contenues dans un plan commun (29) sensiblement parallèle au premier plateau (22), et le bloc ferromagnétique (12) et le chapeau non magnétique (16) du deuxième côté présentent des surfaces regardant vers le premier côté qui sont à l'affleurement l'une de l'autre et contenues dans un plan commun parallèle au deuxième plateau (14), et des trous de vis (30, 18) sont ménagés pour monter les premier et deuxième demi-moules (34, 32) sur les plans communs respectifs.

2. Machine selon la revendication 1, dans lequel les blocs de plateaux (26, 12) du premier et du deuxième côtés sont formés d'une seule pièce avec le premier plateau et le deuxième plateau (22, 14) respectivement.

3. Machine selon la revendication 1 ou la revendication 2, dans laquelle le premier bloc de plateau (26) et le premier plateau (22) sont fixes et le deuxième bloc de plateau (12) et le deuxième plateau (14) sont mobiles.

*FIG. 1*

*FIG. 1A*

EP 0 157 608 B1

## FIG. 2

## FIG. 3

## FIG. 3A

2